# EUROPEAN PATENT APPLICATION

(11) **EP 3 364 071 A2**
(43) Date of publication of application: **22.08.2018**
(21) Application number: 16816732.8
(22) Date of filing: 11.10.2016
(51) Int. Cl.: F16H 1/32, F16H 55/10, F16H 55/17

(54) **INTERNALLY MESHED TRANSMISSION MECHANISM**

(30) Priority: 13.10.2015 CN 201510655588; 28.12.2015 CN 201510993164; 08.06.2016 CN 201610404869; 08.06.2016 CN 201610403994; 08.06.2016 CN 201620555031 U
(71) Applicant: Ningbo HS-Power Drive Technology Co. Ltd., Ningbo Zhejiang 315048 (CN)
(72) Inventor: CHEN, Yuhao, Nanjing Jiangsu 210049 (CN); FAN, Zhengfu, Chaoyang District Beijing 100101 (CN)
(74) Representative: LS-MP von Puttkamer Berngruber Loth Spuhler
(86) International application number: PCT/IB2016/001459
(87) International publication number: WO 2017/064549

(57) **Abstract**

The present invention provides an inner meshing transmission mechanism, which comprises an outer wheel, the outer wheel being provided with a first number of circular arc teeth on its inner edge, and said first number of circular arc teeth being arranged around the inner edge of the outer wheel; an inner wheel, the inner wheel being provided with a second number of teeth on its outer rim, said second number of teeth being arranged around the outer rim of the inner wheel, wherein m>n; an eccentric rotation device configured to enable said inner wheel to be eccentrically placed inside of outer wheel; wherein one of said outer wheel, said inner wheel and said eccentric rotation device is connected to an input power, while another one of them being connected to an output device so that power is transmitted through engagement between said outer wheel and said inner wheel; and wherein the toothed profile of said inner wheel is designed such that at any time when said inner wheel is engaging with said outer wheel for transmission, only a portion of said second number of teeth engage with said first number of circular arc teeth, while the rest of said second number of teeth are separate from said first number of arc teeth.

## Description

### TECHNICAL FILED

The present invention relates generally to inner meshing transmission mechanism.

### BACKGROUND

This section is intended to provide a background or context to the invention recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Compared with the external meshing transmission mechanism, the inner meshing transmission mechanism has better benefits such as smaller size, higher speed ratio of single-stage transmission, and easier to achieve multi-tooth meshing. For the inner meshing transmission mechanism, when the tooth number difference is one (1) between the inner and outer gears, the speed ratio is the largest. However, when the tooth number difference is one (1) with traditional common involute gear for engagement, there is tooth engagement interference between the inner and outer gears, which will have tooth jam and consequently no rotation taken place between the inner and outer gears. Thus, to achieve largest speed ratio for the inner meshing transmission mechanism, the interference problem for the engagement between the inner and outer gears has to be solved.

At present, the harmonic gear and a fully closed cycloidal wheel drive mechanism are the most widely used in inner meshing transmission mechanism. Harmonic drive mechanism uses flexspline as the outer gear with ellipse shape for engagement to solve the meshing interference between the inner and outer gears. The application of harmonic drive is very limited because of the difficulty of flexspline manufacturing and small torque output.

The cycloidal wheel and roller drive mechanism uses a cycloidal wheel as the inner wheel, which is engaging with rollers on the outer wheel to transmit power. The profile of the cycloidal wheel is cycloid (i.e., a track of a fix point on a circle when the circle is rolling on a straight line) or modified cycloid which realizes non-interference engagement between the inner wheel and the rollers. However, the profile of fully closed cycloidal wheel is always engaging with the rollers on the outer wheel, which results in large volume of friction between the inner wheel and the rollers. In order to reduce the friction, the common typical means is to put a sleeve bearing on each roller on the outer wheel, which turns the sliding friction into rolling fiction. However, the size of transmission mechanism becomes larger and the rollers intent to be bended if large torque transmission is required because the rollers are supported on both ends but the force is loaded in the middle.

Because of the above-mentioned shortcomings, neither the harmonic nor the cycloid transmission mechanism is ideal for small size, high speed ratio, large torque transmission applications.

### SUMMARY OF THE INVENTION

The present invention is to provide an inner meshing transmission mechanism which solve all the shortcomings of the existing gear transmission mechanism.

According to a first aspect of the present invention, an inner meshing transmission mechanism is provided, which comprises an outer wheel, the outer wheel being provided with a first number of circular arc teeth on its inner edge, and said first number of circular arc teeth being arranged around the inner edge of the outer wheel; an inner wheel, the inner wheel being provided with a second number of teeth on its outer rim, said second number of teeth being arranged around the outer rim of the inner wheel, and wherein m>n; wherein each tooth comprising: one tooth top, the profile of said tooth top being designed such that when the inner wheel is engaging with the outer wheel for transmission, said tooth top has no tangency with said circular arc teeth on the outer wheel; and two tooth waists respectively connecting to both sides of said tooth top, wherein the profile of each said tooth waist is designed such that when said inner wheel is engaging with said outer wheel for transmission, said tooth waist engages with and disengages from said circular arc teeth periodically to achieve multi-teeth synchronous meshing without interference between the teeth on the inner wheel and the circular arc teeth on the outer wheel; and the inner wheel further having a plurality of tooth links for connecting adjacent teeth.

According to the first aspect of the present invention, said tooth link is a curve or straight line; said tooth top is a curve or a straight line; and said tooth waist is a smooth composite curve consisting of one or more selecting from the group of curves, straight lines, arcs and splines.

According to the first aspect of the present invention, one segment of said tooth waist is a curve, which is formed as an envelope curve by a series of continuous meshing points between a corresponding tooth on the inner wheel and a corresponding circular arc tooth on the outer wheel in a designated engagement area when said inner wheel is engaging with said outer wheel for transmission, such that multiple teeth on the inner wheel engage with the rollers on the outer wheel at the designated engagement areas without interference but no tangency or engagement takes place outside the designated engagement areas.

According to the first aspect of the present invention, the length and position of said envelope curve on said tooth waist depend on the number of meshing teeth and designated tooth engagement intervals of said inner wheel and said outer wheel.

According to the first aspect of the present invention, the curve or straight line forming said tooth top is smoothly connected to said envelope curve of said tooth waist by a transition curve.

According to the first aspect of the present invention, the curve or straight line forming each said tooth link is smoothly connected with said envelope curve of said tooth waist by a transition curve and/or a straight line, wherein said tooth links are not in tangency with any circular arc teeth on the outer wheel at any time; or the curve forming each said tooth link is the same envelope curve with that on said tooth waist.

According to the first aspect of the present invention, further comprising an eccentric rotation device which is capable of driving said inner wheel to have translational motion and rotation relatively to the inner edge of said outer wheel.

According to the first aspect of the present invention, only a portion of said second number of teeth engaged or contact with said first number of circular arc teeth when said inner wheel is engaging with said outer wheel for transmission, while the rest of said second number of teeth are separate from said first number of circular arc teeth.

According to the first aspect of the present invention, said m-n = a (a∈ 1, 2, 3 ... natural integer); said inner wheel rotates number 'a' of tooth angles when said eccentric rotation device rotates one cycle (360 degrees), because of tooth number difference between said inner wheel and said outer wheel, and said inner wheel rotates in an opposite direction to said eccentric rotation device.

According to the first aspect of the present invention, said first number of circular arc teeth inside of said outer wheel are rollers.

According to the first aspect of the present invention, the value of the parameter d for the eccentricity of eccentric rotation device is larger than r/2, where r is radius of the roller.

According to the first aspect of the present invention, said first number of circular arc teeth inside of said outer wheel are rollers; and the distance from the center of each said roller to any points on its corresponding tooth link is larger than or equal to the radius of said roller in all meshing areas between the teeth on the inner wheel and the rollers.

According to the first aspect of the present invention, the inner edge of said outer wheel are provided with roller grooves thereon, the radius of said roller grooves is the same as the radius of said rollers.

According to the first aspect of the present invention, said rollers are positioned in said roller grooves by roller positioning rings or controlled inside of said roller grooves by spacer rings.

According to the first aspect of the present invention, all the tooth tops of the inner wheel have no tangency with said circular arc teeth of the outer wheel when said inner wheel is engaging with said outer wheel for transmission.

According to the first aspect of the present invention, all the tooth tops and tooth links of the inner wheel have no tangency with said circular arc teeth of said outer wheel when said inner when said inner wheel is engaging with said outer wheel for transmission.

According to the first aspect of the present invention, each tooth of said inner wheel is disengaged at least once from said circular arc teeth on said outer wheel during a rotation cycle of said eccentric rotation device.

According to the first aspect of the present invention, the inner meshing transmission mechanism has at least four inner wheels in parallel.

According to the first aspect of the present invention, the total number of the circular arc teeth meshed synchronously with said second number of teeth is less than 60% of the total number of said circular arc teeth when said inner wheel is engaging with said outer wheel for transmission.

According to the first aspect of the present invention, further comprising a planetary carrier, wherein said inner wheel is placed inside the planetary carrier for transferring torque and rotation between said inner wheel and the planetary carrier.

According to the first aspect of the present invention, the eccentric rotation device is placed inside of the planetary output carrier, which is installed inside of the outer wheel.

According to the first aspect of the present invention, a half of said tooth top, one said tooth waist adjacent to said half of tooth top and a half of said tooth link adjacent to said one tooth waist are formed from one curve or a series of curves with smooth connections.

According to a second aspect of the present invention, an inner meshing transmission mechanism is provided, which comprises an outer wheel, the outer wheel being provided with a first number of circular arc teeth on its inner edge, and said first number of circular arc teeth being arranged around the inner edge of the outer wheel; an inner wheel, the inner wheel being provided with a second number of teeth on its outer rim, said second number of teeth being arranged around the outer rim of the inner wheel, wherein m>n; an eccentric rotation device configured to enable said inner wheel to be eccentrically placed inside of outer wheel; wherein one of said outer wheel, said inner wheel and said eccentric rotation device is connected to an input power, while another one of them being connected to an output device so that power is transmitted through engagement between said outer wheel and said inner wheel; and wherein the toothed profile of said inner wheel is designed such that at any time when said inner wheel is engaging with said outer wheel for transmission, only a portion of said second number of teeth engage with said first number of circular arc teeth, while the rest of said second number of teeth are separate from said first number of arc teeth.

According to the second aspect of the present invention, each tooth comprising one tooth top, the profile of said tooth top being designed such that when the inner wheel is engaging with the outer wheel for transmission, said tooth top has no tangency with said circular arc teeth on the outer wheel; and two tooth waists respectively connecting to both sides of said tooth top, wherein the profile of each said tooth waist is designed such that when said inner wheel is engaging with said outer wheel for transmission, said tooth waist engages with and disengages from said circular arc teeth periodically to achieve multi-teeth synchronous meshing without interference between the teeth on the inner wheel and the circular arc teeth on the outer wheel; and the inner wheel further having a plurality of tooth links for connecting adjacent teeth.

According to the second aspect of the present invention, said tooth link is a curve or straight line; said tooth top is a curve or a straight line; and said tooth waist is a smooth composite curve consisting of one or more selecting from the group of curves, straight lines, arcs and splines.

According to the second aspect of the present invention, one segment of said tooth waist is a curve, which is formed as an envelope curve by a series of continuous meshing points between a corresponding tooth on the inner wheel and a corresponding circular arc tooth on the outer wheel in a designated engagement area when said inner wheel is engaging with said outer wheel for transmission, such that multiple teeth on the inner wheel engage with the rollers on the outer wheel at the designated engagement areas without interference but no tangency or engagement takes place outside the designated engagement areas.

According to the second aspect of the present invention, the length and position of said envelope curve on said tooth waist depend on the number of meshing teeth and designated tooth engagement intervals of said inner wheel and said outer wheel.

According to the second aspect of the present invention, the curve or straight line forming said tooth top is smoothly connected to said envelope curve of said tooth waist by a transition curve.

According to the second aspect of the present invention, the curve or straight line forming each said tooth link is smoothly connected with said envelope curve of said tooth waist by a transition curve and/or a straight line, wherein said tooth links are not in tangency with any circular arc teeth on the outer wheel at any time; or the curve forming each said tooth link is the same envelope curve with that on said tooth waist.

According to the second aspect of the present invention, m-n = a (a∈ 1, 2, 3 ... natural integer); and said inner wheel rotates number 'a' of tooth angles when said eccentric rotation device rotates one cycle (360 degrees), and said inner wheel rotates in an opposite direction to said eccentric rotation device.

According to the second aspect of the present invention, said first number of circular arc teeth inside of said outer wheel are rollers.

According to the second aspect of the present invention, the first number of circular arc teeth inside of outer wheel are rollers, the value of the parameter d for the eccentricity of eccentric rotation device is larger than r/2, where r is radius of the roller.

According to the second aspect of the present invention, the value of the parameter d for the eccentricity of eccentric rotation device is larger than r / 2, where r is radius of the roller.

According to the second aspect of the present invention, the inner edge of said outer wheel are provided with roller grooves thereon, the radius of said roller grooves is the same as the radius of said rollers.

According to the second aspect of the present invention, said rollers are positioned in said roller grooves by roller positioning rings or controlled inside of said roller grooves by spacer rings.

According to the second aspect of the present invention, all the tooth tops of the inner wheel have no tangency with said circular arc teeth of the outer wheel when said inner wheel is engaging with said outer wheel for transmission.

According to the second aspect of the present invention, all the tooth tops and tooth links of the inner wheel have no tangency with said circular arc teeth of said outer wheel when said inner wheel is engaging with said outer wheel for transmission.

According to the second aspect of the present invention, each tooth of said inner wheel is separate at least once from said circular arc teeth during a rotation cycle of said eccentric rotation device.

According to the second aspect of the present invention, the inner meshing transmission mechanism has at least four inner wheels in parallel.

According to the second aspect of the present invention, the total number of the circular arc teeth meshed synchronously with said second number of teeth is less than 60% of the total number of said circular arc teeth when said inner wheel is engaging with said outer wheel for transmission.

According to the second aspect of the present invention, further comprising a planetary carrier, wherein said inner wheel is placed inside the planetary carrier for transferring torque and rotation between said inner wheel and the planetary carrier.

According to the second aspect of the present invention, the eccentric rotation device is placed inside of the planetary output carrier, which is installed inside of the outer wheel.

According to the second aspect of the present invention, a half of said tooth top, one said tooth waist adjacent to said half of tooth top and a half of said tooth link adjacent to said one tooth waist are formed from one curve or a series of curves with smooth connections.

According to a third aspect of the present invention, an inner wheel for engaging with an outer wheel in an inner meshing transmission mechanism is provided, said inner wheel being provided with a second number of teeth on its outer rim for engagement with a first number of circular arc teeth provided on the inner edge of said outer wheel, wherein each tooth comprising: one tooth top, the profile of said tooth top being designed such that when the inner wheel is engaging with the outer wheel for transmission, said tooth top has no tangency with said circular arc teeth on the outer wheel; and two tooth waists respectively connecting to both sides of said tooth top, wherein the profile of each said tooth waist is designed such that when said inner wheel is engaging with said outer wheel for transmission, said tooth waist engages with and disengages from said circular arc teeth periodically to achieve multi-teeth synchronous meshing without interference between the teeth on the inner wheel and the circular arc teeth on the outer wheel; and the inner wheel further having a plurality of tooth links for connecting adjacent teeth.

According to the third aspect of the present invention, each said tooth link is a curve or straight line; said tooth top is a curve or a straight line; and said tooth waist is a smooth composite curve consisting of one or more selecting from the group of curves, straight lines, arcs and splines.

According to the third aspect of the present invention, one segment of said tooth waist is a curve, which is formed as an envelope curve by a series of continuous meshing points between a corresponding tooth on the inner wheel and a corresponding circular arc tooth on the outer wheel in a designated engagement area when said inner wheel is engaging with said outer wheel for transmission, such that multiple teeth on the inner wheel engage with the rollers on the outer wheel at the designated engagement areas without interference but no tangency or engagement takes place outside the designated engagement areas.

According to the third aspect of the present invention, the length and position of said envelope curve on said tooth waist depend on the number of meshing teeth and designated tooth engagement intervals of said inner wheel and said outer wheel.

According to the third aspect of the present invention, the curve or straight line forming said tooth top is smoothly connected to said envelope curve of said tooth waist by a transition curve.

According to the third aspect of the present invention, the curve or straight line forming each said tooth link is smoothly connected with said envelope curve of said tooth waist by a transition curve and/or a straight line, wherein said tooth links are not in tangency with any circular arc teeth on the outer wheel at any time; or the curve forming each said tooth link is the same envelope curve with that on said tooth waist.

According to the third aspect of the present invention, a half of said tooth top, one said tooth waist adjacent to said half of tooth top and a half of said tooth link adjacent to said one tooth waist are formed from one curve or a series of curves with smooth connections.

Compared with the existing transmission system, the inner meshing transmission mechanism in accordance with the present invention can effectively avoid interference and reduce the friction coming from the engagement between the inner wheel and outer wheel, thus the gearbox or transmission system with the inner meshing transmission mechanism will have smaller size with larger speed ratio, larger output torque, longer life, higher efficiency and so on.

### BRIEF DESCRIPTION OF DRAWINGS

The following detail description combined with accompanying drawings is to better understand the present invention, wherein similar reference numbers refer to similar parts or elements in different drawings, and in which:
Figure 1 is a schematic front view of the inner meshing mechanism in accordance with the present invention;
Figure 2 is a schematic structural view of the inner wheel of the present invention;
Figure 3A is a schematic view of the toothed profile on the inner wheel of the present invention;
Figure 3B is a schematic view of the engagement between a roller on the outer wheel and a tooth on the inner wheel of the present invention;
Figures 4A-4F illustrate engagement of the inner meshing transmission of the present invention in simplified schematic views to show how the teeth of the inner wheel and the rollers of the outer wheel engage and separate when the eccentric rotation device 116 rotates one cycle;
Figure 5 is a simplified engagement diagram of the inner meshing transmission mechanism in accordance with the present invention showing a comparison of the respective positions of the inner wheel in two different positions of the eccentric rotation device;
Figure 6 is a partial perspective schematic view of an outer wheel according to the present invention showing a structure for mounting the rollers on the outer wheel;
Figure 7A is a perspective schematic view of the inner meshing transmission mechanism in accordance with the present invention;
Figure 7B is a cross-sectional view of the inner meshing transmission mechanism in accordance with the present invention.

### DETAILED DESCRIPTION OF EMBODIMENTS

The following is the description of embodiments of the present invention with reference to the accompanying drawings. It shall be understood that all the terms for directional indication of parts and structure such as 'front', 'rear', up', 'down', 'left', 'right' etc. are used herein for convenience of explanation only. Since the disclosed embodiments of the present invention may have many different arrangements, such terms used for description shall not be regarded as a limitation to the invention. Wherever possible, the same or similar reference number for the parts or elements in different areas means the same or similar parts or elements.

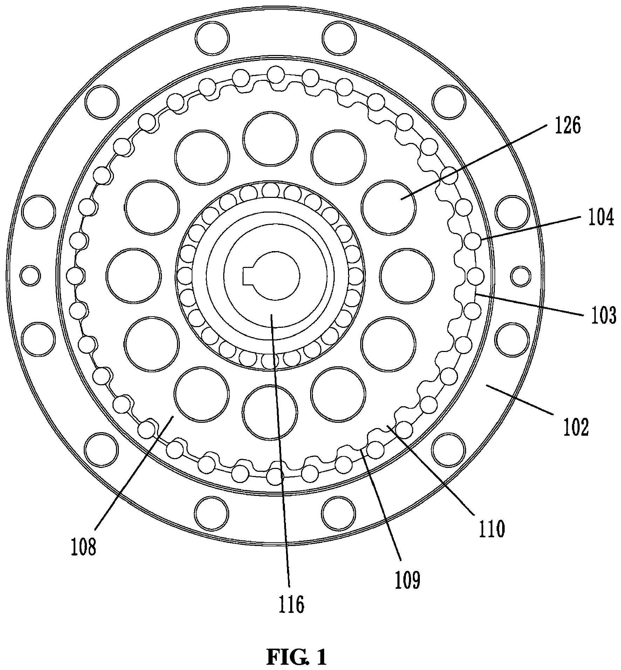

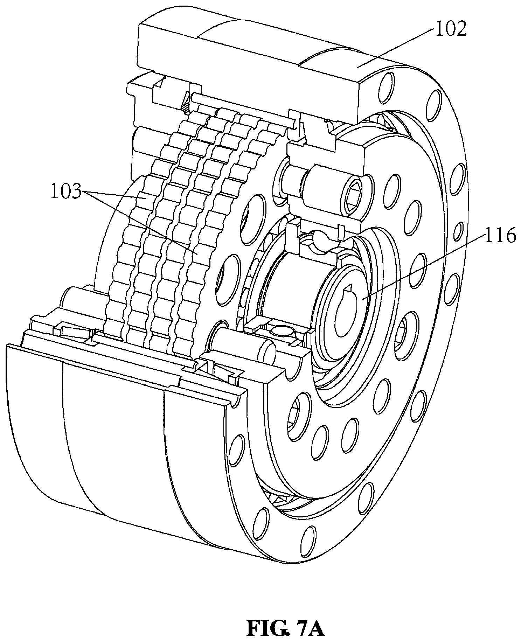

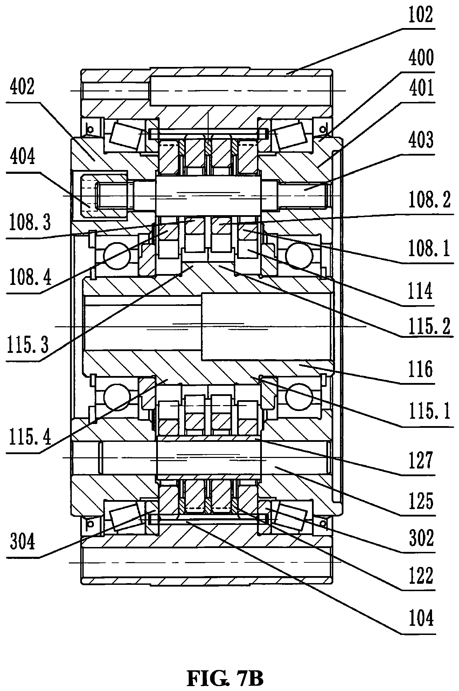

The inner meshing transmission mechanism according to the present invention as shown in FIG.1 includes an outer wheel 102, an inner wheel 108 and an eccentric rotation device 116. The eccentric rotation device 116 is placed inside of the inner wheel 108 while the outer wheel 102 is placed outside the inner wheel 108. The inner meshing transmission mechanism is also provided with a planetary carrier 400 (not shown in FIG 1, but in FIG. 7A and FIG. 7B) to enable power transmission between the inner wheel 108 and the outer wheel 102, wherein the inner wheel 108 and the planetary carrier 400 are placed inside the outer wheel 102. By interaction between these parts, the engagement between the inner wheel 108 and the outer wheel 102 are realized for the purpose of reducing or increasing output speed. When output with reduced speed is required, the eccentric rotation device 116 is used as the high speed input while either the planetary carrier 400 or the outer wheel 102 is used as the low speed output, wherein if the outer wheel 102 is used as the low speed output, the planetary carrier 400 shall be fixed, and if the planetary carrier 400 is used as the low speed output, the outer wheel 102 shall be fixed. When output with increased speed is required, either the planetary carrier 400 or the outer wheel 102 is used as the high speed input while the eccentric rotation device 116 is used as the low speed output. The inner meshing transmission mechanism of the present invention can realize multiple reduced speed output modes and increased speed output modes. In order to better describe the inner meshing transmission mechanism of the present invention, it will be described below with the reduced speed output mode in which the planetary carrier 400 is used as the output while the eccentric rotation device 116 is used as the high speed input. In this reduced speed output mode, the eccentric rotation device 116 is connected to an external power source with high speed, the planetary carrier 400 outputs reduced speed and the outer wheel 102 is remained stationary.

As shown in FIG. 1, in the inner meshing transmission mechanism of the present invention, the outer wheel 102 has an inner edge 103 which is provided with a first number of circular arc teeth 104 (i), (i = 1, 2, ..., m) thereon. The inner wheel 108 has an outer rim 109 which is provided with a second number of teeth 110 (j), (j = 1, 2, ..., n) thereon. The inner edge 103 of the outer wheel 102 forms a housing space in which the inner wheel 108 is eccentrically placed such that the inner wheel 108 can be brought into engagement with the outer wheel 102 by the second number of teeth 110 (j), (j = 1, 2, ..., n) provided on the inner wheel 108 and the first number of circular arc teeth 104 (i), (i = 1, 2, ..., m) provided on the outer wheel 102.

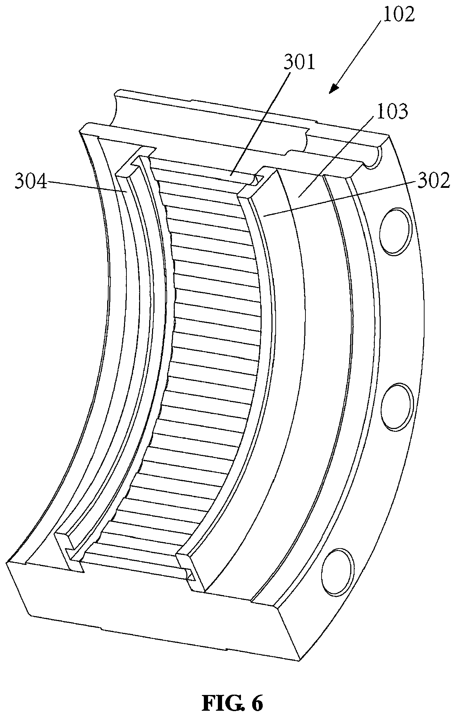

The first number of circular arc teeth 104 (i),(i = 1, 2, ..., m) on the outer wheel 102 can be formed in multiple ways, such as by circular arc teeth directly profiled on the inner edge 103 of the outer wheel 102 or by rollers mounted in roller grooves on the inner edge 103 of the outer wheel 102. When the circular arc teeth are formed by rollers mounted in roller grooves on the inner edge 103 of the outer wheel 102, the shape of the portions of the rollers 104 projecting from the inner edge 103 of the outer wheel 102 form the shape of the circular arc teeth. Other ways to form the circular arc teeth are also feasible, as long as the circular arc teeth are able to engage with the teeth on the inner wheel 108 to enable the power transmission between the inner wheel 108 and the outer wheel 102 by engagement. According to an embodiment of the present invention, rollers are provided to form the first number of circular arc teeth 104 (i),(i = 1, 2, ..., m) and are installed within respective roller grooves provided on the inner edge 103 of the outer wheel 102. The specific roller installation will be described later in detail with reference to FIG.6. According to an example of the present invention, Fig. 1 shows the circular arc teeth formed by rollers. For convenience of description for the embodiments of the present invention, the rollers instead of circular arc tooth are used hereinafter.

Still referring to Fig.1, the central portion of the inner wheel 108 is provided with a housing space for accommodating the eccentric rotation device 116, which offsets the inner wheel 108. The inner wheel 108 is arranged on the eccentric rotation device 116 by means of a bearing on the eccentric segment (see Fig. 7B in detail). The inner wheel 108 has a plurality of holes 126 for holding output pins of the planetary carrier 400 (not shown in the FIG.1).

Translational motion of the inner wheel 108 takes place when the eccentric rotation device 116 is rotating with high speed, meanwhile, low-speed rotation of the inner wheel 108 is realized because of the engagement between the teeth on the inner wheel 108 and rollers on the outer wheel 102 and the principle of tooth number difference, the same is then outputted through the planetary carrier. The inner wheel 108 provides number 'n' of teeth, the outer wheel 102 provides number 'm' of rollers which is greater than the number 'n' to form the principle of tooth number difference. Wherein, m-n=a. According to an example of the present invention, a=1. But it should be noted that 'a' can be any natural integer.

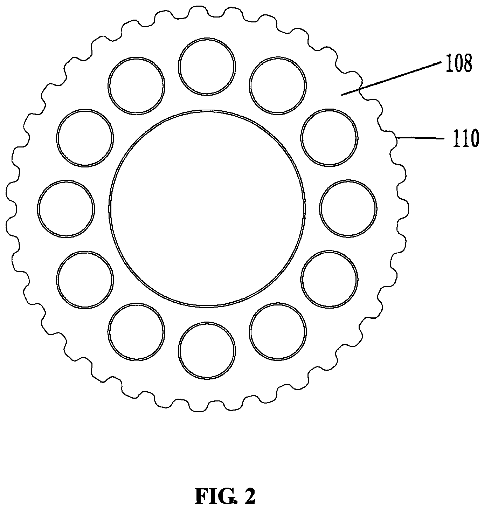

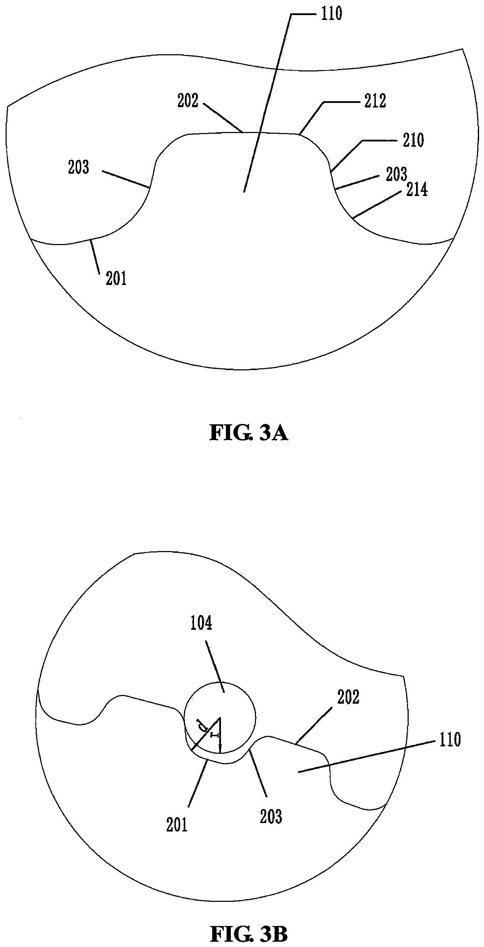

The toothed profile on the inner wheel 108 of the inner meshing transmission mechanism according to the present invention is designed for having multi-teeth meshing synchronously without interference even if the tooth number difference is one (1) between the rollers on the outer wheel and the teeth on the inner wheel. The same is to enable multi-teeth meshing synchronously without interference to transmit power by engagement between the teeth on the inner wheel 108 and the rollers on the outer wheel 102. Furthermore, the toothed profile on the inner wheel 108 according to the present invention is designed such that when the inner wheel 108 is engaging with the outer wheel 102 for transmission, only a portion of the second number of teeth on the inner wheel 108 engage with the rollers on the outer wheel 102 while the rest of teeth on the inner wheel 108 are separate from the rollers on the outer wheel 102. The toothed profile on the inner wheel 108 of the present invention will be described in detail below with reference to Figs. 2 and 3A.

As shown in Fig. 2, which illustrates the schematic structural view of the inner wheel 108 of the present invention, the second number of teeth 110 (j) (j = 1, 2, ..., n) are arranged around the outer edge 109 of the inner wheel 108. Fig. 3A illustrates the toothed profile on the inner wheel. As shown in Fig. 3A, each tooth has a tooth top 202 and two tooth waists 203 connected to both sides of the tooth top 202. Two adjacent teeth 110 are connected by a tooth link 201. The tooth links 201, tooth tops 202 and tooth waists 203 together form the toothed profile on the inner wheel of the present invention. According to the present invention, a half of the tooth top 202 of one tooth and one side of tooth waist 203 connecting to the half of the tooth top 202 together with a half of a tooth link 201 connecting to the one side of tooth waist 203 are formed from one curve or a series of curves with smooth connections.

Figure 3B is a schematic view showing the engagement between a tooth on the inner wheel and a roller on the outer wheel in accordance with the present invention, which shows that a roller is in engagement with the left side tooth adjacent thereto.

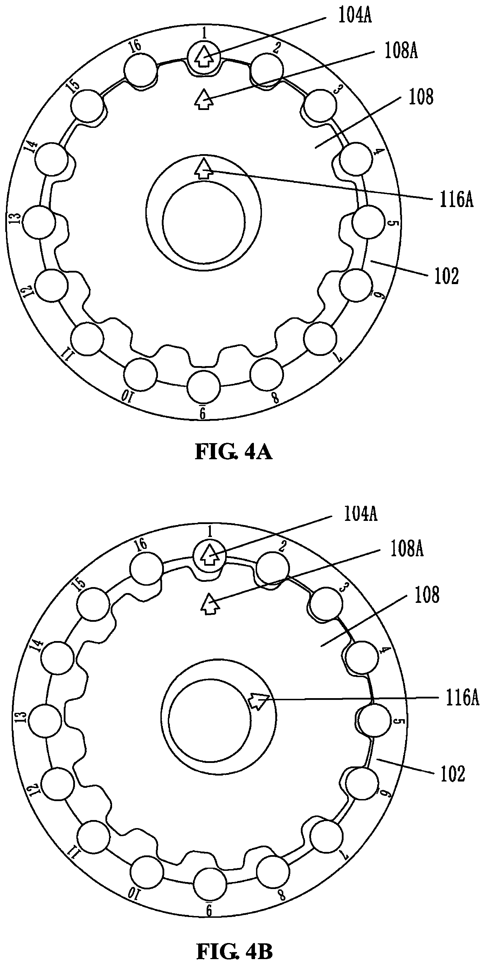

The profile of the tooth top 202 according to the present invention is designed such that it has no tangency with the rollers at any time when the inner wheel 108 is engaging with the outer wheel 102 for transmission (the same will be described in detail hereinafter with reference to Figures 4A-4F). Therefore, as shown in Figs. 3A and 3B, the tooth top 202 is designed as a curve or a straight line. As shown in Fig. 2, as an example, the tooth top 202 is a curve having the same center with the inner wheel 108, which means all the tooth tops 202 are located on a circle which is concentric with the inner wheel 108.

The profile of the tooth waist 203 is designed such that when the inner wheel 108 is engaging with the outer wheel 102 for transmission, the tooth waist (203) engages with and disengages from the rollers periodically to achieve multi-teeth synchronous meshing without interference between the teeth on the inner wheel (108) and the circular arc teeth on the outer wheel (102), so as to transmit power between the inner wheel 108 and the outer wheel 102. Therefore, the tooth waist 203 is designed as a smooth composite curve consisting of one or more selecting from the group of curves, straight lines, arcs and splines. One segment of the tooth waist 203 is a meshing curve 210 for meshing with the rollers. According to one embodiment of the present invention, when the rollers are engaging with the inner wheel 108, the rollers only contact the meshing curve 210 on the tooth waist 203, but not contact the other portions on the tooth waist 203 (The same will be described in detail hereinafter with reference to Figures 4A-4F). As an example, the meshing curve 210 is an envelope curve which is formed by a series of continuous meshing points between a corresponding tooth on the inner wheel and a corresponding roller on the outer wheel in a designated engagement area when said inner wheel having translational motion and rotation, such that multiple teeth on the inner wheel engage with the rollers on the outer wheel at the designated engagement areas without interference but no tangency or engagement taken place outside the designated engagement areas. The length and position of the envelope curve on the tooth waist 203 depend on the number of meshing teeth and the designated tooth engagement intervals of the teeth on the inner wheel and rollers on the outer wheel.

The tooth link 201 according to the present invention is also designed as a curve or a straight line. The tooth link 201 may or may not have tangency with the rollers when the inner wheel 108 is engaging with the outer wheel 102 for transmission depending on the number of meshing teeth and the designated tooth engagement intervals of the teeth on the inner wheel and rollers on the outer wheel. If the meshing area on the inner wheel is designed to cover the tooth link 201, the tooth link 201 is the same envelope curve with the meshing curve 210 of the tooth waist 203. In this situation, both the tooth link 201 and the meshing curve 210 on the tooth waist 203 have tangency with the rollers. If the meshing area is designed not to cover the tooth link 201, the tooth link 201 is smoothly connected with the envelope curve (meshing curve 210) on the adjacent tooth waist 203 by a transition curve and/or a straight line 214. As a result, the friction between the inner wheel and the outer wheel is reduced to some extent because of no engagement between the tooth link 201 and the rollers on the outer wheel 102.

As shown in the embodiment in Fig. 3B, the tooth link 201 is designed such that it has no engagement or tangency with the rollers at any time when the inner wheel 108 is rotating or revolving relative to the outer wheel 102. As it can be clearly seen from Fig. 3B which shows the engagement status of a roller between two adjacent thus designed teeth, the roller is only engaged with the tooth waist 203, but without with the tooth link 201, which means the roller is separate from the tooth link 201. As can be seen from Fig. 3B, the distance from the center of the roller to any points on its adjacent tooth link 201 is larger than the radius of the roller. The tooth waist 203 further includes a transition straight line and/or curve 214 for smoothly connecting the meshing curve 210 and the tooth link 201 as shown in Fig. 3A.

As an example as shown in Fig. 3A, in addition to the meshing curve 210, the tooth waist 203 also includes a transition curve 212, which connects the meshing curve 210 to the tooth top 202 smoothly. Simply put, the tooth waist 203 includes in the order of a transition curve 212, a meshing curve 210, a transition straight line and/or curve 214 from the top to the bottom, as shown in Fig. 3A.

Of course, in addition to the example shown in Fig. 3A, the tooth waist 203 may have different profile as long as multi-teeth continuous engagement takes place between the rollers and the tooth waists 203 on the inner wheel 108. Due to the aforementioned toothed profile design, at any time when the inner wheel 108 is rotating or revolving relative to the outer wheel 102, only a portion of the second number of teeth 110 (j) (j = 1, 2, ..., 3) on the inner wheel 108 engage with the rollers 104, while the rest of the second number of teeth are separate from the rollers. Furthermore, the engagement takes place only between a portion of the tooth waist and the rollers or between the portion of the tooth waist together with the tooth link and the rollers, while the tooth top has no tangency with the rollers. Consequently, the friction generated by engagement is greatly reduced compared with the traditional fully closed cycloidal wheel transmission mechanism.

This type of engagement design is to achieve no interference for meshing even if the difference between the number m of the rollers on the outer wheel and the number n of the teeth on the inner wheel is only one (1) (i.e., one tooth number difference). According to an example of the present invention, the total number of the meshing rollers with the teeth on the inner wheel is less than 60% of the total number m of the rollers at any time when the inner wheel 108 is rotating or revolving relative to the outer wheel 102.

However, it should be noted that the same toothed profile design as mentioned-above, when applied to the condition in which the tooth number difference between the number m of the rollers on the outer wheel and the number n of the teeth on the inner wheel is greater than 1, can also reduce the number of the meshing teeth and thus reduce friction.

In addition, the toothed profile design of the inner wheel 108 of the present invention is based on a large eccentric volume (as compared to a conventional cycloidal transmission), namely, the eccentricity is larger than that of a conventional cycloidal transmission. The eccentricity of the eccentric rotation device 116 will be described below with reference to Fig. 4H.

In order to better understand the status in which only a portion of the second number of teeth on the inner wheel 108 engage with the rollers on the outer wheel 102, Figures 4A-4F illustrate in simplified engagement schematic views how the teeth of the inner wheel and the rollers of the outer wheel engage and disengage when the eccentric rotation device 116 rotates one cycle (i.e., the rotation angle T = 360 °). In these simplified engagement schematic views, it is assumed that the outer wheel 102 has only 16 rollers and the inner wheel 108 has 15 teeth which is one less than that of the rollers for the convenience of description and understanding. The rollers have been marked from 1-16 in each figure for illustrating the partial engagement between the rollers and the teeth. In addition, mark arrows 116A, 108A, and 104A are additionally provided on or beside the eccentric rotation device 116, the inner wheel 108 and a roller 104, respectively, to show the relative positional variations of the three components in the respective figures. It should be noted that the positions of the mark arrows on their corresponding components are fixed.

Fig. 4A shows the engagement status of the inner and outer wheels in the initial rotational position of the eccentric rotation device 116 (i.e., T = 0). Eight rollers numbered 2, 3, 4, 5, 13, 14, 15 and 16 are engaged with their corresponding eight teeth on the inner wheel 108 in this position, while the remaining rollers are separate from the inner wheel 108. At this moment, the directions of the mark arrows 116A, 108A and 104A corresponding to the eccentric rotation device 116, the inner wheel 108 and the roller 104, respectively, are in a straight line.

Fig. 4B shows the engagement status of the inner and outer wheels when the eccentric rotation device 116 is rotated clockwise by 67.5 ° (i.e., T = 67.5 °). Eight rollers numbered 5, 6, 7, 8 and 3, 2, 1, 16 are engaged with their corresponding eight teeth on the inner wheel 108 in this position, while the remaining rollers are separate from the inner wheel 108. By comparing the arrow directions from Fig. 4B to Fig. 4A, the eccentric rotation device 116 is rotated in clockwise direction by 67.5° while the inner wheel 108 is rotated in counter-clockwise direction by 4.5 ° (tooth number difference principle).

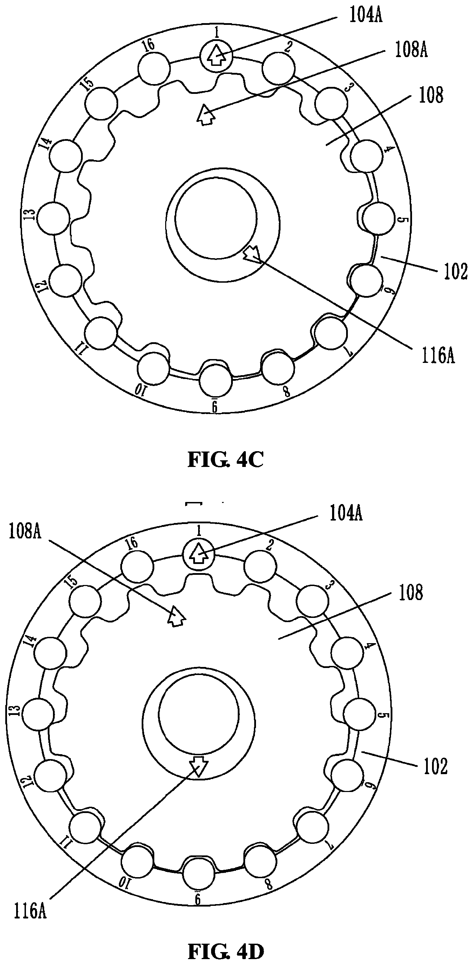

Fig. 4C shows the engagement status of the inner and outer wheels when the eccentric rotation device 116 is rotated clockwise by 135 ° (i.e., T = 135 °). Eight rollers numbered 3, 4, 5, 6 and 8, 9, 10, 11 are engaged with their corresponding eight teeth on the inner wheel 108 in this position, while the remaining rollers are separate from the inner wheel 108.

Fig. 4D shows the engagement status of the inner and outer wheels when the eccentric rotation device 116 is rotated clockwise by 180 ° (i.e., T = 180 °). Eight rollers numbered 5, 6, 7, 8 and 10, 11, 12, 13 are engaged with their corresponding eight teeth on the inner wheel 108 in this position, while the remaining rollers are separate from the inner wheel 108.

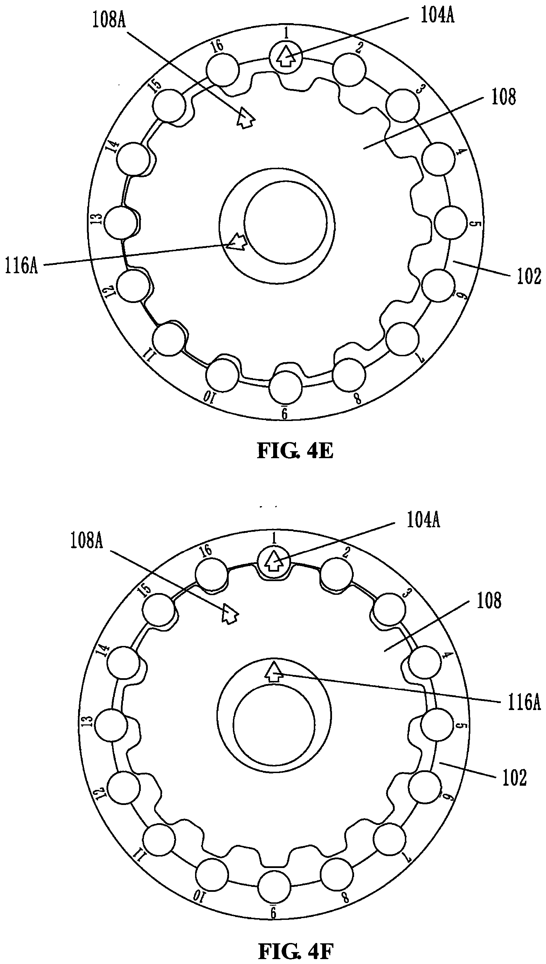

Fig. 4E shows the engagement status of the inner and outer wheels when the eccentric rotation device 116 is rotated clockwise by 247.5 ° (i.e., T = 247.5 °). Eight rollers numbered 8, 9, 10, 11 and 13, 14, 15, 16 are engaged with their corresponding eight teeth on the inner wheel 108 in this position, while the remaining rollers are separate from the inner wheel 108.

Fig. 4F shows the engagement status of the inner and outer wheels when the eccentric rotation device 116 is rotated clockwise by 360 ° (i.e., T = 360 °). Eight rollers numbered 13, 14, 15, 16 and 2, 3, 4, 5 are engaged with their corresponding eight teeth on the inner wheel 108 in this position, while the remaining rollers are separate from the inner wheel 108, but the mark arrow 108A on the inner wheel 108 indicates that the same has rotated counterclockwise by 24 °, namely, one tooth angle of the inner wheel.

As it can be seen from Figs. 4A-4F, only a portion of the teeth of the inner wheel are engaged with the rollers at any time when the inner wheel 108 is rotating or revolving relative to the outer wheel 102, while the remaining teeth of the inner wheel are completely separate from the rollers. In the example shown in Figs. 4A-4F, at any time, the number of the rollers engaged with the teeth is 50% of the total number of the rollers and each tooth of the inner wheel 108 separate from the rollers of the outer wheel 102 at least once during rotation of the eccentric rotation device 116 for one cycle (360 °).

Additionally, by comparing Figs. 4A and 4F, the inner wheel 108 rotates one tooth angle in counter-clockwise direction while the eccentric rotation device 116 rotates one cycle in clockwise direction. That is to say, while the eccentric rotation device 116 rotates one cycle in one direction, the inner wheel 108 rotates number 'a' of tooth angles in the opposite direction, where a= the number of rollers on the outer wheel (m)- the number of teeth on inner wheel (n).

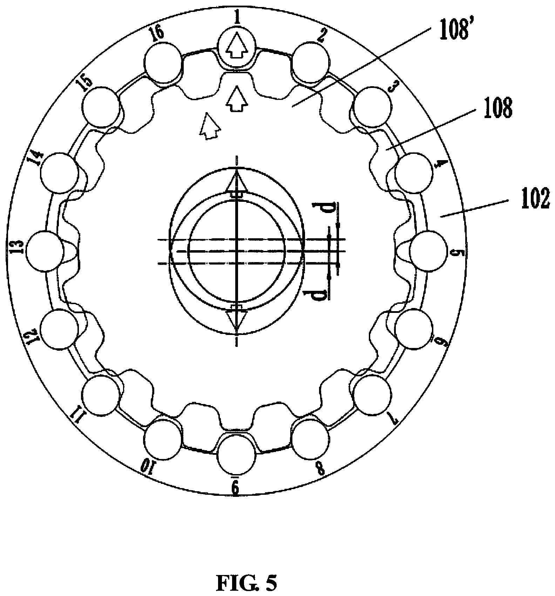

Fig. 5 is formed by overlapping Figs. 4A and 4D, wherein the position of the inner wheel in Fig. 4D is shown in dotted lines, to show the positional variation of the inner wheel after the eccentric rotation device 116 is rotated by 180° comparing to its initial position (i.e., T = 0 °). As visually shown in Fig. 5, translational motion takes place for the inner wheel 108 because of the rotation of the eccentric rotation device 116, and rotation in counter-clockwise direction takes place because of the engagement.

In addition, as shown in Fig. 5, the eccentricity generated by the eccentric rotation device 116 to the inner wheel is 'd'. According to an example of the present invention, the eccentricity d is larger than r/2, where r is the radius of the arc tooth or roller 104, i.e., d > r/2.

The inner meshing transmission mechanism of the present invention can reduce the friction generated from engagement between the inner wheel and outer wheel because only a portion of the teeth on the inner wheel engage with the rollers on the outer wheel, therefore, sleeve bearings for rollers are not necessary for reducing the friction and the rollers can be directly placed in roller grooves with solid support in full groove length. Furthermore, interference can be avoided without roller movement but only rotation in the roller grooves. A roller mounting structure is specifically shown in FIG. 6.

Fig. 6 shows a structure for mounting rollers in an outer wheel. For the sake of clarity of illustration, Fig. 6 shows only a small portion of the outer wheel. As shown in Fig. 6, the inner edge 103 of the outer wheel 102 is provided with a plurality of roller grooves 301, the number of which is the same as the rollers. The radius of the roller groove 301 is the same as the roller radius. Two roller positioning rings 302, 304 are provided at the ends of the roller grooves 301 to position the rollers by supporting both ends of the rollers. The rollers can transmit large torque without bending since the rollers can be rotated in the roller grooves 301 but have solid support in full groove length. The roller grooves 301 bear the full loads from the roller.

According to another roller mounting structure of the present invention, the rollers can be also precisely positioned in the roller groove 301 by inner wheel spacer rings 122 (the same will be described later).

In addition to the above-mentioned components and structures, the inner meshing transmission mechanism of the present invention also includes other parts or members. Figures 7A and 7B show a detailed structure of an example of the inner meshing transmission mechanism according to the present invention. Fig. 7A shows a perspective structural view and Fig. 7B shows a sectional view of the inner meshing transmission mechanism.

According to an embodiment of the present invention, the inner meshing transmission mechanism may have multiple inner wheels 108 arranged in parallel and symmetrically, but with different eccentric directions by 180°, 90°, or 120°. Using multiple inner wheels is to achieve dynamic balance and symmetrical force counteracting on the bearings at the both ends of the input shaft so as to achieve smooth running of the input shaft . Of course, it is also applicable with only one inner wheel. Using any number of inner wheels is within the scope of the present invention.

As shown in Fig. 7B, the inner meshing transmission mechanism has four inner wheels 108.1, 108.2, 108.3 and 108.4 arranged side by side and in parallel. The eccentric rotation device 116, thus, is an eccentric shaft which has a crankshaft with four symmetrical eccentric segments 115.1, 115.2, 115.3 and 115.4 as shown in Fig. 7B, wherein the two eccentric segments 115.2 and 115.3 in the middle are in the same eccentric direction, while the other two 115.1 and 115.4 are in the same eccentric direction which is 180° opposite to that of the two eccentric segments 115.2 and 115.3 in the middle. Each of the inner wheels 108.1, 108.2, 108.3 and 108.4 is placed on its corresponding eccentric section 115.1, 115.2, 115.3 and 115.4 of the eccentric shaft by a bearing 114 in parallel with spacer rings 122 in between. The spacer rings 122 can also be used to precisely control the rollers in the roller grooves 301.

The planetary carrier 400 of the inner meshing transmission mechanism comprises a first output end 402, a second output end 401, planetary carrier bolts 403, nuts 404 and output pins 125. The eccentric shaft 116 is disposed within the planetary carrier 400 with both ends arranged in the central bores in the first output end 402 and the second output end 401 by bearings, respectively. The first output end 402 and the second output end 401 are flanges, which are fastened by bolts 403 and nuts 404 to form a hollow planetary carrier 400. The four inner wheels 108.1, 108.2, 108.3 and 108.4 are placed inside of the planetary carrier 400 with multiple output pins 125 passing through pinholes on all the inner wheels, and both ends of the output pins respectively are mounted in the first and second output ends 402 and 401. Sleeve bearings 127 are provided on the output pins 125. The planetary carrier 400 are placed inside of the outer wheel 102 (or called "shell") through main bearings on the two output flanges of 402 and 401 and are sealed to the outside by means of seals to prevent lubricating oil inside of the inner meshing transmission mechanism to leak.

The following describes how the mechanism shown in Figs. 7A and 7B works by taking the speed reduction mode in which the eccentric rotation device 116 (i.e., eccentric shaft) is the power input and the inner wheel 108 is the power output.

In this speed reduction mode, the eccentric shaft 116 is connected to a driving power source (e.g., a motor) while the planetary carrier 400 is connected to an external output device and the outer wheel 102 is connected to a base (i.e., the outer wheel is remained stationary). The eccentric shaft 116 will have the same high speed as the motor. when the driving motor starts rotation, the inner wheel 108 will be conducted by translational motion with the aid of the eccentric segments 115 of the eccentric shaft 116 via bearings. The frequency of the translational motion of the inner wheel 108 is the same as the motor speed. Meanwhile, the inner wheel 108 will be conducted by rotation because of the engagement between the teeth on the inner wheel 108 and the rollers on the outer wheel 102. Specifically, according to the inner meshing tooth number difference principle, if the tooth number difference is 'a' between the teeth on the inner wheel 108 and the rollers on the outer wheel, the inner wheel 108 will rotate number 'a' of tooth angles while it makes translational motion for one cycle (i.e., the eccentric rotation device 116 rotates 360°), and the rotation direction of the inner wheel 108 is opposite to that of the eccentric rotation device 116. This is shown in Figs. 4A-4F in a very intuitive manner. During the rotation of the inner wheel 108, rotation and torque are transmitted from the inner wheel 108 to the planetary carrier 400 through the pins 125 placed inside of the inner wheel such that the planetary carrier 400 is forced to rotate simultaneously and thus rotation and torque are transmitted to the external output device through the first output end 402 and/or the second output end 401 of the planetary carrier 400. Therefore, a speed reduction in transmission between the input and the output is achieved by the apparatus shown in Figs. 7A and 7B.

In addition to the speed reduction mode described in detail above, according to other modes as we aforementioned, the first and second output ends 402 and 401 of the planetary carrier 400 are fixed, i.e., the planetary carrier 400 is fixed. Then the inner wheel 108 is conducted by translational motion only but without rotation when the eccentric rotation device is rotated by the driving motor, since the planetary carrier 400 is fixed. During the translational motion of the inner wheel, the outer wheel 102 rotates in low speed in the same direction as the eccentric shaft 116 and delivers output torque at the same time. Furthermore, the inner meshing transmission mechanism of the present invention can realize the function of increasing speed, if the first output end 402 or the second output end 401 is used as low speed input and the outer wheel 102 is fixed to a base (or if the first output end 402 or the second output end 401 is fixed and the outer wheel 102 is used as low speed input), the eccentric rotation shaft 116 will rotate at a high speed to achieve an increased speed.

Two typical applications of the inner meshing transmission mechanism according to the present invention and operation thereof are described in detail hereinabove. Any one of the outer wheel, the inner wheel and the eccentric rotation device may be connected to the power input while any one of the others may be connected to the external output device to transmit power through engagement between the inner wheel and the outer wheel. The foregoing is merely an illustration, but not a limitation to any applications. The inner meshing transmission mechanism according to the present invention can be applied to many different applications and needs with various desired modes.

Even though the present application is described with reference to specific embodiments in the drawings, it should be understood that the present invention can achieve many different inner wheel configurations and speed reduction or increasing modes by structural modifications without departing from the spirit and context as taught by the present invention. It should be noted by a person skilled in the art that many different ways by changing parameters, such as dimensions, profiles, elements or material types, all fall within the spirit and scope of the claims of the present invention.

## Claims

1. An inner meshing transmission mechanism comprising:
an outer wheel (102), the outer wheel (102) being provided with a first number of circular arc teeth (104 (i), i = 1, 2, ..., m) on its inner edge (103), and said first number of circular arc teeth (104 (i), i = 1, 2, ..., m) being arranged around the inner edge (103) of the outer wheel (102);
an inner wheel (108), the inner wheel (108) being provided with a second number of teeth (110 (j), j = 1, 2, ..., n) on its outer rim (109), said second number of teeth (110 (j), j = 1, 2, ..., n) being arranged around the outer rim (109) of the inner wheel (108), and wherein m>n;
wherein each tooth (110 (j), (j = 1, 2, ..., n) comprising:
one tooth top (202), the profile of said tooth top (202) being designed such that when the inner wheel (108) is engaging with the outer wheel (102) for transmission, said tooth top (202) has no tangency with said circular arc teeth on the outer wheel (102); and
two tooth waists (203) respectively connecting to both sides of said tooth top (202), wherein the profile of each said tooth waist (203) is designed such that when said inner wheel (108) is engaging with said outer wheel (102) for transmission, said tooth waist (203) engages with and disengages from said circular arc teeth periodically to achieve multi-teeth synchronous meshing without interference between the teeth on the inner wheel (108) and the circular arc teeth on the outer wheel (102); and
the inner wheel (108) further having a plurality of tooth links (201) for connecting adjacent teeth.

2. The inner meshing transmission mechanism in claim 1, wherein:
said tooth link (201) is a curve or straight line;
said tooth top (202) is a curve or a straight line; and
said tooth waist (203) is a smooth composite curve consisting of one or more selecting from the group of curves, straight lines, arcs and splines.

3. The inner meshing transmission mechanism in claim 2, wherein one segment of said tooth waist (203) is a curve (210), which is formed as an envelope curve by a series of continuous meshing points between a corresponding tooth on the inner wheel (108) and a corresponding circular arc tooth on the outer wheel (102) in a designated engagement area when said inner wheel (108) is engaging with said outer wheel (102) for transmission, such that multiple teeth on the inner wheel (108) engage with the rollers on the outer wheel (102) at the designated engagement areas without interference but no tangency or engagement takes place outside the designated engagement areas.

4. The inner meshing transmission mechanism in claim 3, wherein the length and the position of said envelope curve on said tooth waist (203) depend on the number of meshing teeth and designated tooth engagement intervals of said inner wheel (108) and said outer wheel (102).

5. The inner meshing transmission mechanism in claim 3, wherein the curve or straight line forming said tooth top (202) is smoothly connected to said envelope curve of said tooth waist (203) by a transition curve (212).

6. The inner meshing transmission mechanism in claim 3, wherein the curve or straight line forming each said tooth link (201) is smoothly connected with said envelope curve of said tooth waist (203) by a transition curve and/or straight line (214), wherein said tooth links (201) are not in tangency with any circular arc teeth (104) on the outer wheel (102) any time.

7. The inner meshing transmission mechanism in claim 3, wherein the curve forming each said tooth link (201) is the same envelope curve with that on said tooth waist (203).

8. The inner meshing transmission mechanism in claim 1, further comprising an eccentric rotation device (116) which is capable of driving said inner wheel (108) to have translational motion and rotation relatively to the inner edge (103) of said outer wheel (102).

9. The inner meshing transmission mechanism in claim 1, wherein only a portion of said second number of teeth (110 (j), j = 1, 2, ..., n) engage or contact with said first number of circular arc teeth (104 (i), i = 1, 2, ..., m) when said inner wheel (108) is engaging with said outer wheel (102) for transmission, while the rest of said second number of teeth (110 (j), j = 1, 2, ..., n) are separate from said first number of circular arc teeth (104 (i), i = 1, 2, ..., m).

10. The inner meshing transmission mechanism in claim 8, wherein:
said m-n = a (a∈ 1, 2, 3 ... natural integer);
said inner wheel (108) rotates number 'a' of tooth angles when said eccentric rotation device (116) rotates one cycle (360 degrees), and said inner wheel (108) rotates in an opposite direction to said eccentric rotation device (116).

11. The inner meshing transmission mechanism in claim 1, wherein said first number of circular arc teeth (104 (i), i = 1, 2, ..., m) on said outer wheel (102) are rollers.

12. The inner meshing transmission mechanism in claim 11, further comprising an eccentric rotation device (116) which is capable of driving said inner wheel (108) to have translational motion and rotation relatively to the inner edge (103) of said outer wheel (102); and
wherein the value of the parameter d for eccentricity of said eccentric rotation device (116) is larger than r/2, where r is the radius of said roller (d>r/2).

13. The inner meshing transmission mechanism in claim 1, wherein:
said first number of circular arc teeth (104 (i), i = 1, 2, ..., m) on said outer wheel (102) are rollers; and
the distance from the center of each said roller to any points on its corresponding tooth link (201) is larger than or equal to the radius of said roller in all meshing areas between the teeth on the inner wheel (108) and the rollers.

14. The inner meshing transmission mechanism in claim 11, wherein the inner edge (103) of said outer wheel (102) are provided with roller grooves (301) thereon, the radius of said roller grooves (301) is the same as the radius of said rollers.

15. The inner meshing transmission mechanism in claim 14, wherein said rollers are positioned in said roller grooves (301) by roller positioning rings (302, 304) or controlled inside of said roller grooves (301) by spacer rings (122).

16. The inner meshing transmission mechanism in claim 1, wherein all the tooth tops (202) on the inner wheel (108) have no tangency with said circular arc teeth when said inner wheel (108) is engaging with said outer wheel (102) for transmission.

17. The inner meshing transmission mechanism in claim 6, wherein all the tooth tops (202) and tooth links (201) on the inner wheel (108) have no tangency with said circular arc teeth when said inner wheel (108) is engaging with said outer wheel (102) for transmission

18. The inner meshing transmission mechanism in claim 1, wherein each tooth of said inner wheel (108) is separate at least once from said circular arc teeth (104) on said outer wheel (102) during a rotation cycle of said eccentric rotation device (116).

19. The inner meshing transmission mechanism in claim 1, wherein said inner meshing transmission mechanism has at least four inner wheels (108.1, 108.2, 108.3, 108.4) arranged in parallel.

20. The inner meshing transmission mechanism in claim 1, wherein the total number of the circular arc teeth (104 (i), i = 1, 2, ..., m) meshed synchronously with said second number of teeth (110 (j), j = 1, 2, ..., n) is less than 60% of the total number of said circular arc teeth when said inner wheel (108) is engaging with said outer wheel (102) for transmission.

21. The inner meshing transmission mechanism in claim 1, further comprising a planetary carrier (400), wherein said inner wheel (108) is placed inside the planetary carrier (400) for transferring torque and rotation between said inner wheel (108) and the planetary carrier (400).

22. The inner meshing transmission mechanism in claim 21, wherein said eccentric rotation device (116) is placed inside of said planetary carrier (400), which is installed inside of the outer wheel (102).

23. The inner meshing transmission mechanism in claim 2, wherein a half of said tooth top (202), one said tooth waist (203) adjacent to said half of tooth top (202) and a half of said tooth link (201) adjacent to said one tooth waist (203) are formed from one curve or a series of curves with smooth connections.

24. An inner meshing transmission mechanism comprising:
an outer wheel (102), the outer wheel (102) being provided with a first number of circular arc teeth (104 (i), i = 1, 2, ..., m) on its inner edge (103), and said first number of circular arc teeth (104 (i), i = 1, 2, ..., m) being arranged around the inner edge (103) of the outer wheel (102);
an inner wheel (108), the inner wheel (108) being provided with a second number of teeth (110 (j), j = 1, 2, ..., n) on its outer rim (109), said second number of teeth (110 (j), j = 1, 2, ..., n) being arranged around the outer rim (109) of the inner wheel (108), wherein m>n;
an eccentric rotation device (116) configured to enable said inner wheel (108) to be eccentrically placed inside of outer wheel (102);
wherein one of said outer wheel (102), said inner wheel (108) and said eccentric rotation device (116) is connected to an input power, while another one of them being connected to an output device so that power is transmitted through engagement between said outer wheel (102) and said inner wheel (108); and
wherein the toothed profile of said inner wheel (108) is designed such that at any time when said inner wheel (108) is engaging with said outer wheel (102) for transmission, only a portion of said second number of teeth (110 (j), j = 1, 2, ..., n) engage with said first number of circular arc teeth (104 (i), i = 1, 2, ..., m), while the rest of said second number of teeth (110 (j), j = 1, 2, ..., n) are separate from said first number of arc teeth (104 (i), i = 1, 2, ..., m).

25. The inner meshing transmission mechanism in claim 24, wherein each tooth (110 (j), (j = 1, 2, ..., n) comprising:
one tooth top (202), the profile of said tooth top (202) being designed such that when the inner wheel (108) is engaging with the outer wheel (102) for transmission, said tooth top (202) has no tangency with said circular arc teeth on the outer wheel (102); and
two tooth waists (203) respectively connecting to both sides of said tooth top (202), wherein the profile of each said tooth waist (203) is designed such that when said inner wheel (108) is engaging with said outer wheel (102) for transmission, said tooth waist (203) engages with and disengages from said circular arc teeth periodically to achieve multi-teeth synchronous meshing without interference between the teeth on the inner wheel (108) and the circular arc teeth on the outer wheel (102); and
the inner wheel (108) further having a plurality of tooth links (201) for connecting adjacent teeth.

26. The inner meshing transmission mechanism in claim 25, wherein:
said tooth link (201) is a curve or straight line;
said tooth top (202) is a curve or straight line; and
said tooth waist (203) is a smooth composite curve consisting of one or more selecting from the group of curves, straight lines, arcs and splines.

27. The inner meshing transmission mechanism in claim 26 wherein one segment of said tooth waist (203) is a curve (210), which is formed as an envelope curve by a series of continuous meshing points between a corresponding tooth on the inner wheel (108) and a corresponding circular arc tooth on the outer wheel (102) in a designated engagement area when said inner wheel (108) is engaging with said outer wheel (102) for transmission, such that multiple teeth on the inner wheel (108) engage with the rollers on the outer wheel (102) at the designated engagement areas without interference but no tangency or engagement takes place outside the designated engagement areas.

28. The inner meshing transmission mechanism in claim 27 wherein the length and position of said envelope curve on said tooth waist (203) depend on the number of meshing teeth and designated tooth engagement intervals of said inner wheel (108) and said outer wheel (102).

29. The inner meshing transmission mechanism in claim 27, wherein the curve or straight line forming said tooth top (202) is smoothly connected to said envelope curve of said tooth waist (203) by a transition curve (212).

30. The inner meshing transmission mechanism in claim 27, wherein the curve or straight line forming each said tooth link (201) is smoothly connected with said envelope curve of said tooth waist (203) by a transition curve and/or straight line (214), wherein said tooth links (201) are not in tangency with any circular arc teeth (104) on the outer wheel (102) at any time.

31. The inner meshing transmission mechanism in claim 27, wherein the curve forming each said tooth link (201) is the same envelope curve with that on said tooth waist (203).

32. The inner meshing transmission mechanism in claim 24, wherein:
said m-n = a (a∈ 1, 2, 3 ... natural integer);
said inner wheel (108) rotates number 'a' of tooth angles when said eccentric rotation device (116) rotates one cycle (360 degrees), and said inner wheel (108) rotates in an opposite direction to said eccentric rotation device (116).

33. The inner meshing transmission mechanism in claim 24, wherein said first number of circular arc teeth (104 (i), i = 1, 2, ..., m) inside of the outer wheel (102) are rollers.

34. The inner meshing transmission mechanism in claim 25, wherein:
said first number of circular arc teeth (104 (i), i = 1, 2, ..., m) inside of the outer wheel (102) are rollers; and
the distance from the center of each said roller to any points on its corresponding tooth link (201) is larger than or equal to the radius of said roller in all meshing areas between the teeth on the inner wheel (108) and the rollers.

35. The inner meshing transmission mechanism in claim 33, wherein the value of the parameter d for eccentricity of said eccentric rotation device (116) is larger than r/2, where r is the radius of said roller (d>r/2).

36. The inner meshing transmission mechanism in claim 33, wherein the inner edge (103) of said outer wheel (102) are provided with roller grooves (301) thereon, the radius of said roller grooves (301) is the same as the radius of said rollers.

37. The inner meshing transmission mechanism in claim 36, wherein said rollers are positioned in said roller grooves (301) by roller positioning rings (302, 304) or controlled inside of said roller grooves (301) by spacer rings (122).

38. The inner meshing transmission mechanism in claim 25, wherein all the tooth tops (202) of the inner wheel (108) have no tangency with said circular arc teeth of the outer wheel (102) when said inner wheel (108) is engaging with said outer wheel (102) for transmission.

39. The inner meshing transmission mechanism in claim 30, wherein all the tooth tops (202) and tooth links (201) of the inner wheel (108) have no tangency with said circular arc teeth (104) of the outer wheel (102) when said inner wheel (108) is engaging with said outer wheel (102) for transmission.

40. The inner meshing transmission mechanism in claim 24, wherein each tooth of said inner wheel (108) is separate at least once from said circular arc teeth (104) during a rotation cycle of said eccentric rotation device (116).

41. The inner meshing transmission mechanism in claim 24, wherein said inner meshing transmission mechanism has at least four said inner wheels (108.1, 108.2, 108.3, 108.4) arranged in parallel.

42. The inner meshing transmission mechanism in claim 24, wherein the total number of the circular arc teeth (104 (i), i = 1, 2, ..., m) meshed synchronously with said second number of teeth (110 (j), j = 1, 2, ..., n) is less than 60% of the total number of said circular arc teeth when said inner wheel (108) is engaging with said outer wheel (102) for transmission.

43. The inner meshing transmission mechanism in claim 24, further comprising a planetary carrier (400), wherein said inner wheel (108) is placed inside the planetary carrier (400) for transferring torque and rotation between said inner wheel (108) and the planetary carrier (400).

44. The inner meshing transmission mechanism in claim 43, wherein said eccentric rotation device (116) is placed inside of said planetary carrier (400), which is installed inside of the outer wheel (102).

45. The inner meshing transmission mechanism in claim 26, wherein a half of said tooth top (202), one said tooth waist (203) adjacent to said half of tooth top (202) and a half of said tooth link (201) adjacent to said one tooth waist (203) are formed from one curve or a series of curves with smooth connections.

46. An inner wheel (108) for engaging with an outer wheel (102) in an inner meshing transmission mechanism, said inner wheel (108) being provided with a second number of teeth (110 (j), j = 1, 2, ..., n) on its outer rim (109) for engagement with a first number of circular arc teeth (104 (i), i = 1, 2, ..., m) provided on the inner edge (103) of said outer wheel (102), said second number of teeth (110 (j), j = 1, 2, ..., n) being arranged around the outer rim (109) of the inner wheel (108),
wherein each tooth (110 (j), j = 1, 2, ..., n) comprising:
one tooth top (202), the profile of said tooth top (202) being designed such that when the inner wheel (108) is engaging with the outer wheel (102) for transmission, said tooth top (202) has no tangency with said circular arc teeth on the outer wheel (102) at any time; and
two tooth waists (203) respectively connecting to both sides of said tooth top (202), wherein the profile of each said tooth waist (203) is designed such that when said inner wheel (108) is engaging with said outer wheel (102) for transmission, said tooth waist (203) engages with and disengages from said outer wheel (102) periodically to achieve multi-teeth synchronous meshing without interference between the inner wheel (108) and the outer wheel (102); and
the inner wheel (108) further having a plurality of tooth links (201) for connecting adjacent teeth.

47. The inner wheel in claim 46, wherein:
said tooth link (201) is a curve or straight line;
said tooth top (202) is a curve or straight line; and
said tooth waist (203) is a smooth composite curve consisting of one or more selecting from the group of curves, straight lines, arcs and splines.

48. The inner wheel in claim 46, wherein one segment of said tooth waist (203) is a curve (210), which is formed as an envelope by a series of continuous meshing points between a corresponding tooth on the inner wheel (108) and a corresponding circular arc tooth on the outer wheel (102) in a designated engagement area when said inner wheel (108) is engaging with said outer wheel (102) for transmission, such that multiple teeth on the inner wheel (108) engage with the rollers on the outer wheel (102) at the designated engagement areas without interference but no tangency or engagement takes place outside the designated engagement areas.

49. The inner wheel in claim 48, wherein the length and position of said meshing curve (210) on said tooth waist (203) depend on the number of meshing teeth and designated tooth engagement intervals of said inner wheel (108) and said outer wheel (102).

50. The inner wheel in claim 48, wherein the curve or straight line forming said tooth top (202) is smoothly connected to said envelope curve of said tooth waist (203) by a transition curve (212).

51. The inner wheel in claim 48, wherein the curve or straight line forming each said tooth link (201) is smoothly connected with said envelope curve of said tooth waist (203) by a transition curve and/or straight line (214), wherein said tooth links (201) are not in tangency with any circular arc teeth (104) on the outer wheel (102) at any time.

52. The inner wheel in claim 48, wherein the curve forming each said tooth link (201) is the same envelope curve with that on said tooth waist (203).

53. The inner wheel in claim 47, wherein a half of said tooth top (202), one said tooth waist (203) adjacent to said half of tooth top (202) and a half of said tooth link (201) adjacent to said one tooth waist (203) are formed from one curve or a series of curves with smooth connections.

54. The inner meshing transmission mechanism comprising any one of or any combinations of the technical features from claims 1-23.

55. The inner meshing transmission mechanism comprising any one of or any combinations of the technical features from claims 24-45.

56. The inner wheel comprising any one of or any combinations of the technical features from claims 46-53.
